# EUROPEAN PATENT APPLICATION

(11) **EP 4 723 095 A1**
(43) Date of publication of application: **08.04.2026**
(21) Application number: 25206637.8
(22) Date of filing: 03.10.2025
(51) Int. Cl.: G10D 1/08, G10D 3/22, G06T 7/521, G06T 7/00, G01B 11/24

(54) **COMPUTER IMPLEMENTED METHOD OF MEASURING THE GEOMETRY OF THE GUITAR**

(30) Priority: 04.10.2024 PL 44995124
(71) Applicant: Ruf Sp. z o.o., 10-683 Olsztyn (PL)
(72) Inventor: Perz, Rafa, 00-660 Warsaw (PL); Zakrzewski, Filip, 85-137 Bydgoszcz (PL); Kuminiarczyk, Michal, 00-174 Warsaw (PL); Popek, Lukasz, 02-506 Warsaw (PL)
(74) Representative: AOMB Polska Sp. z.o.o.

(57) **Abstract**

A computer-implemented method for measuring the geometry of a guitar component is disclosed. A reference three-dimensional model representing a target geometry of the component is provided. The component is placed on a measurement station and scanned using a non-contact optical profilometer to obtain a point cloud. Points not corresponding to the component are filtered. Deviation values are computed by comparing the filtered point cloud with the reference model and are displayed in graphical form including colour-coded visualisation. Deviations affecting sound quality, playability or ergonomic characteristics are identified, and corrective operations are performed on the component based on the identified deviations. The method supports precise geometric evaluation and iterative correction during guitar manufacturing and setup.

## Description

### TECHNICAL FIELD

The subject matter of the invention is a computer-assisted method for measuring the geometry of a guitar for use in the process of guitar manufacturing or correction of guitar workmanship, in particular of guitars. More specifically, the method is intended for quality control and for supporting efficiency in production, correction, and measurement during manufacturing, and is also applicable to guitar setup and adjustment.

### BACKGROUND OF THE ART

The document numbered KR101030270B1 discloses a method for manufacturing electric guitar components comprising casting the guitar components from a mixture containing wood flour, thermoplastic resin, and a binding agent, followed by lamination and polishing the resulting surface to achieve a high gloss.

The document numbered KR100348454B1 discloses a method for finishing an electric guitar, comprising covering the external parts of the guitar with synthetic resin sheets featuring decorative patterns, trimming the unnecessary sheet fragments, and assembling the hardware onto the guitar.

The problem faced by guitar manufacturers is the necessity of assessing the quality of execution of guitar components, identifying areas of the guitar with dimensions that do not correspond to the assumed model and whose presence negatively affects the sound quality of the instrument, and very accurate leveling of geometry deviations in the guitar arising during production, especially within the neck, so that the guitar produces sound with expected parameters. This problem is time-consuming and difficult to solve using only mechanical measuring elements to assess the correct geometry of guitar components.

### DISCLOSURE OF THE INVENTION

The essence of the invention is a computer-assisted guitar-geometry measurement system comprising software configured to process a point cloud obtained from scanning a guitar with a laser profilometer, to calculate the dimensions of the scanned guitar, and to compare those dimensions with the dimensions of a reference guitar model, and to indicate those areas of the guitar for which further mechanical processing is required in order to improve the sound quality of the instrument and the player's comfort. Preferably, the software of the guitar-geometry measurement system indicates whether a region of the scanned guitar that deviates from the reference model corresponds to an area where a material deficit relative to the model occurs, or to an area where a material surplus relative to the guitar model occurs. Preferably, the software of the guitar-geometry measurement system provides, expressed in millimetres, a numerical value of the dimensional difference between a selected point of the scanned guitar and a corresponding point of the guitar model, and displays the result in the form of a heat map or a table of measurement values. A beneficial effect of the guitar-measurement system according to the invention, resulting from the use of dedicated software and a non-contact profilometer, is an increased accuracy in diagnosing workmanship quality and in determining the ranges of necessary corrections, which directly translates into improved sound quality of the guitar and enhanced playing comfort. The use of the method according to the invention leads to a reduction in the duration of production processes, inspection of guitar workmanship, and potential repair procedures. Moreover, the guitar-measurement method according to the invention enables diversification and personalization of the manufactured guitar models due to the possibility of using any number of guitar models as reference templates.

### DESCRIPTION OF THE DRAWINGS

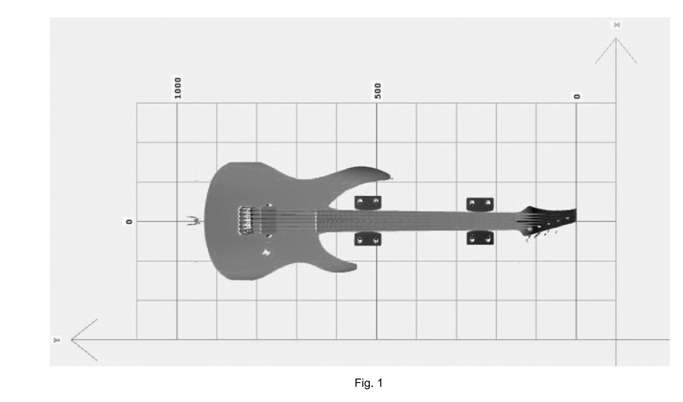

FIG. 1 shows a top view of a three-dimensional point cloud of a guitar positioned on a measurement station.

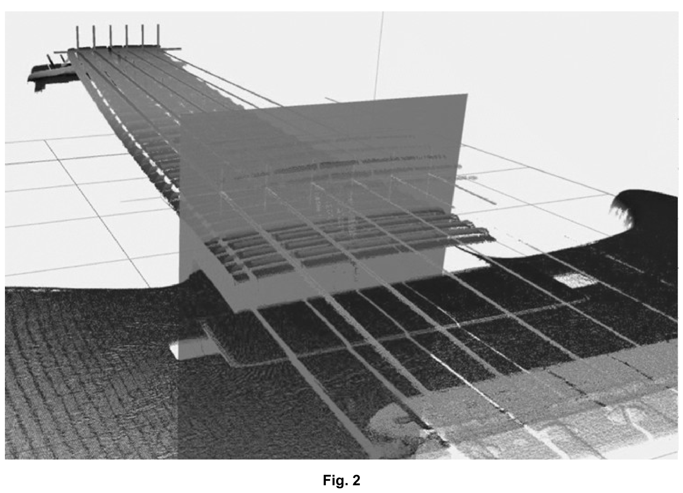

FIG. 2 shows an axonometric view of the point cloud representing guitar components.

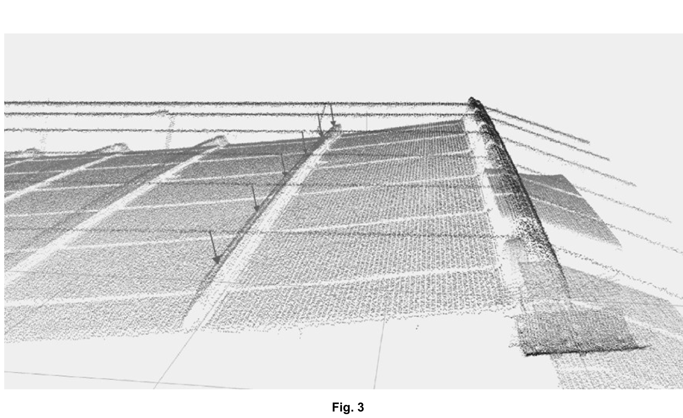

FIG. 3 shows an axonometric view of the point cloud including the fretboard region.

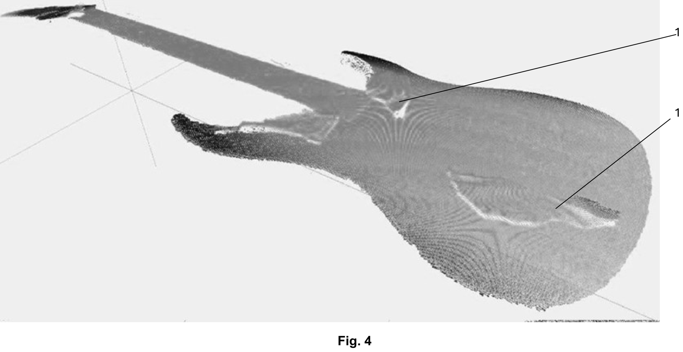

FIG. 4 shows an axonometric view of a guitar model with deviation values indicated.

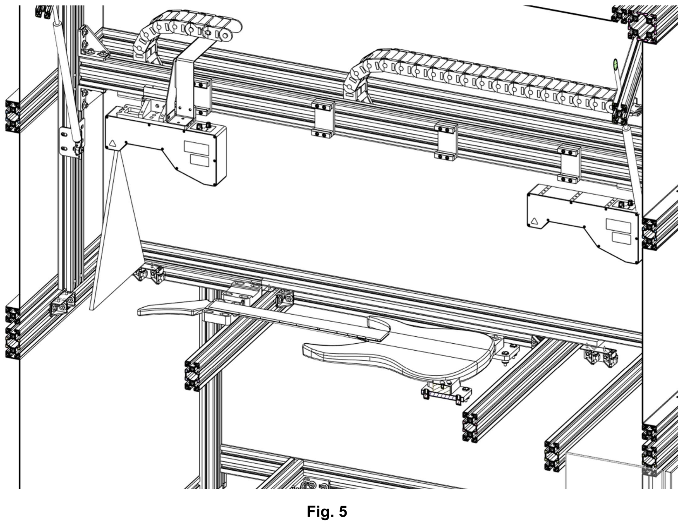

FIG. 5 shows an axonometric view of a reconstructed three-dimensional model of the guitar.

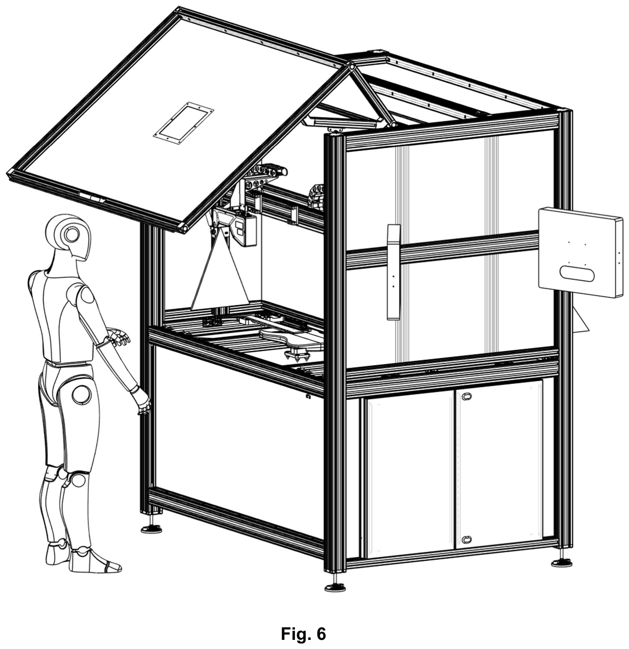

FIG. 6 shows a further axonometric view of the reconstructed model.

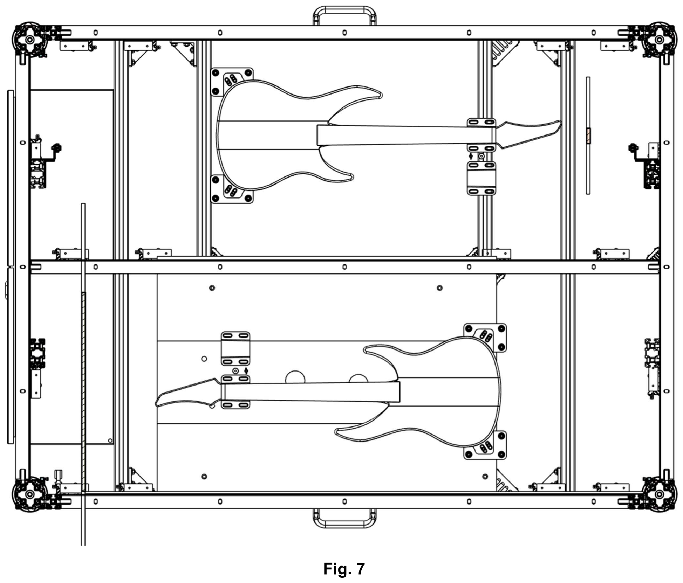

FIG. 7 shows a measurement station configured for the simultaneous placement of two guitars.

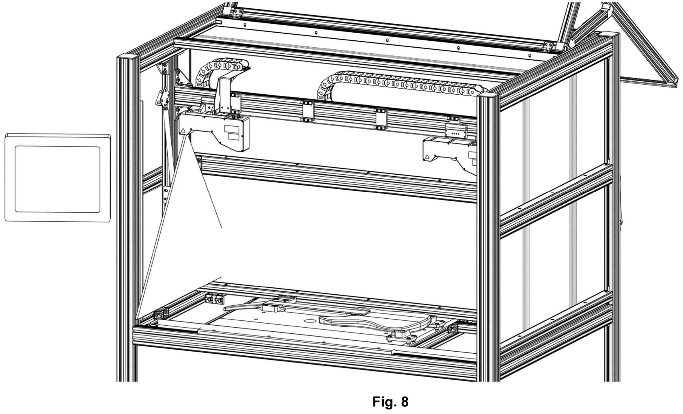

FIG. 8 shows a further view of the dual-guitar measurement station.

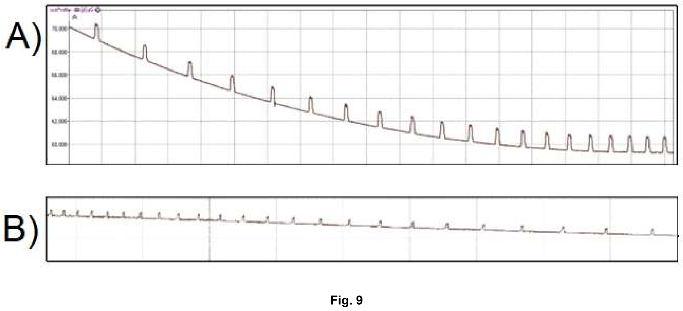

FIG. 9A shows a string-action profile in the presence of significant geometric deviations.
FIG. 9B shows a string-action profile where deviations are minimal.

### DETAILED DESCRIPTION OF EMBODIMENTS

The production of an electric guitar involves a set of sequential operations leading to the creation of a finished instrument. Correct execution of some of these operations requires verification by comparing the manufactured guitar component with a previously prepared template of that component or a CAD model.

Activities performed during production, servicing, or setup of a guitar require inspection using a measurement system. Typically, the measurement system is used when preparing the guitar for gluing the fingerboard to the guitar body part, sanding the glued fingerboard, milling openings for mounting electronic components, fret installation, cutting and sanding installed frets, assembling electronic components, and installing strings. A "template" of a guitar component is understood as a 3D object of the guitar component created in CAD software or another digital data format containing geometric layout data of the guitar or its components.

A "3D object" (or "3D model") refers to a mathematical representation of a three-dimensional object that can be displayed as a two-dimensional image using dedicated software. The file (data) read by the software used by the guitar measurement system according to the invention may contain one or more 3D objects representing successive guitar components prepared in CAD software. Advantageously, the software used by the measurement system according to the invention reads from the 3D object the dimensions between any two points selected on the 3D object of the guitar component.

Advantageously, the dimensions of the guitar component may be manually entered into the software used by the measurement system according to the invention.

Advantageously, the software of the guitar measurement system allows manual entry of the number of reference points and the dimensions required to describe all dimensions of the guitar.

Advantageously, based on the entered number of reference points and dimensions of the guitar component, the software of the measurement system automatically models the 3D object of the guitar component and calculates its dimensions.

An exemplary implementation of the guitar measurement system according to the invention includes the following consecutive steps:
a) entering the software of the measurement system a template of the guitar component.
b) forming the guitar component.
c) placing the guitar component on the measurement station.
d) acquiring data on the geometry of the guitar component surface using an optical scanner in the form of a point cloud.
e) removing from the point cloud acquired in step d) all points representing elements other than the guitar component.
f) calculating deviation 1 of the positions of the surface geometry points of the guitar component from the point cloud as the spatial difference between the points in the point cloud and their corresponding points in the template.
g) displaying on the screen the calculated deviations 1 in the form of a point cloud of a different color among the point cloud representing the surface geometry of the guitar component.
h) displaying on the interface those deviations whose presence affects the sound parameters of the guitar in colors different from those deviations 1 whose presence does not affect the sound parameters. It also affects playability (ergonomics, the number of player body positions, pressure, grip). It may also influence prestige/quality by enabling a very low string action.
i) removing the guitar component from the scanning station and eliminating the identified deviations 1.
j) proceeding to the next operation in the guitar assembly sequence and repeating steps b)-j).

In the described embodiment, the operations in step b) may include forming the guitar component by adding elements to already formed elements or machining already formed elements.

The component formed in step b) is placed on the scanning station during step c).

In the described embodiment, the scanning station may be a dedicated frame, table, or grid on which the guitar component rests motionlessly so that the scanned surface faces the scanner.

The scanner used in the measurement system according to the invention is a non-contact profilometer mounted on a movable robotic arm that moves above the scanned surface of the guitar component and transmits data to the software communicating with the user through a user interface. The non-contact profilometer may be, among others, a laser scanner, LIDAR, 3D camera, or ultrasonic scanner.

The data collected during scanning in step d) of the implementation of the guitar measurement system according to the invention are transferred to the software as a point cloud.

A "point cloud" acquired in step d) is understood as a discrete set of points representing the three-dimensional object in 3D space.

In step e), the software distinguishes points originating from the guitar component from points not originating from the guitar component.

In the described embodiment, this distinction is performed using a shape-recognition algorithm or an Artificial Intelligence (AI) module.

The point cloud collected by the profilometer in step d) contains both points originating from the guitar component and points not originating from the guitar component, such as points of the scanning station scanned simultaneously.

In step f), according to the embodiment, the software calculates the deviation value in millimeters for each point of the guitar component relative to the corresponding point in the template introduced in step a).

A "deviation" 1 is understood as the difference in millimeters between the position of a point on the surface of the guitar component and the corresponding point in the template. A positive deviation means the point is above the corresponding point of the template; a negative deviation means the point is below it.

In step g) the software displays the data in image form on the user interface. The "user interface" is understood as the part of the device or software enabling user interaction with the measurement system. The displayed data may include template data, raw scan data, and processed data. The interface may allow zooming, cropping, calculating distances between arbitrary points, defining planes or curvatures, overlaying images, or measuring angles. The data may be displayed in various forms, such as projections, images, or heat maps. A "heat map" (https://en.wikipedia.org/wiki/Heat map) is understood as a graphical representation of data where a grid representing the intensity of another value is overlaid on a two-dimensional matrix.

In the embodiment, the data displayed in the user interface may include a heat map in which a grid representing the distance of the object's surface from a hypothetical observer is superimposed on the matrix of points. Using an AI module, the software distinguishes deviations that affect the sound parameters of the guitar and thus require removal from those that do not affect the sound and therefore do not require removal, and displays both types of deviations in the user interface. The deviation parameters (positive/negative value, effect on sound or no effect on sound) may be displayed in any graphic form allowing unambiguous identification. Deviations may be displayed as a heat map. Subsequently, in step i), the guitar component is removed from the measurement station and deviations affecting the sound parameters are mechanically removed. Steps b) to i) may be repeated until no deviations are detected. Then, in step j), the next manufacturing operation is performed, some of which require measurement system control, unless step i) completes the final operation and the finished guitar is obtained.

Playing comfort depends on maintaining a specific geometric configuration. Many configurations are possible, but lutherie aims to execute them precisely. A guitar may sound good but still feel uncomfortable if excessive force is needed to press the strings or if a bent string catches on a scratch in a fret.

The primary factor examined after adjusting string length is string action-the height of the string above the fret. Professional players prefer extremely low action-0.4-0.5 mm-to enable fast and effortless playing. However, for expressive playing with higher amplitude vibrations, slightly higher action (usually under 1 mm) may be preferable to avoid fret buzz.

Different actions may be used for different strings: higher for bass strings, lower for treble strings. Ideally, action is consistent along the entire neck.

Fingerboard, frets, and strings are not in a single plane; guitars feature a radius (constant or compound) typically between 12-20". Compound radii are difficult to measure manually-this is where the invention offers particular advantages.

After gluing the fingerboard, its geometry must be verified. Once frets are installed, the fingerboard can no longer be corrected. Fret height, shape, and alignment directly influence string action.

### Key Parameters Summary

- Fingerboard geometry (radius, height, width, length)
- Radius: fixed or compound, typically 12-20"
- Height: 2-6 mm depending on radius
- Width: from 42 mm to over 100 mm
- Length: defined by scale length, typically >20" up to ~30"
- Nut position (string spacing and height)
- String spacing: 8-12 mm
- String height relative to the fingerboard: 1-5 mm
- Fret geometry (radius, height) and spacing
- Fret height: typically 1-2 mm

String spacing, diameter, height: determined by nut, bridge, and proper execution of earlier steps. Playing comfort-an ergonomic parameter-is determined by technical factors such as geometry and the size and height of predictive inaccuracies (deviations 1 such as excess material, voids, pits, burrs).

## Claims

1. A computer-implemented method for measuring the geometry of a guitar, comprising the steps of:
a. acquiring a reference model in the form of a 3D model of the geometry of a guitar component;
b. placing the guitar component on a measurement station;
c. collecting data relating to the geometry of the outer surface of the guitar component using an optical scanner, in the form of a point cloud;
d. removing from the point cloud collected in step c. those points representing elements other than parts of the guitar component;
e. calculating deviations (1) in the positions of points of the geometry of the guitar component from the collected point cloud, as a difference between the spatial positions of the points in the point cloud and their corresponding points of the reference model;
f. displaying on a screen the result of calculating the deviations (1) in the form of a point cloud of a different colour among the point cloud representing the surface geometry of the guitar component;
g. displaying on the interface those deviations (1) whose presence affects the sound parameters produced by the guitar as well as the player's comfort and ergonomics, using colours different from the colours of those deviations whose presence does not affect the sound parameters produced by the guitar;
h. removing the guitar component from the measurement station and eliminating the deviations (1).

2. The method according to claim 1, **characterised in that** in step a. the reference guitar model contains information on the body, neck, headstock, fretboard, frets, nut, bridge, pickups, strings, and tuning keys.

3. The method according to claim 1 or 2, **characterised in that** in step c. the point cloud is collected using an optical profilometer in the form of a laser scanner, a 3D camera, a LiDAR sensor, or an ultrasonic scanner.

4. The method according to any one of claims 1 to 3, **characterised in that** in step e. distinguishing the points in the point cloud and removing points that do not originate from the scanned guitar component is performed using software with a shape-recognition algorithm or software assisted by Artificial Intelligence (AI).

5. The method according to any one of claims 1 to 4, **characterised in that** the displayed image of the point cloud originating from the scan of the guitar component is presented as a heat map.

6. The method according to any one of claims 1 to 5, **characterised in that** in the displayed image of the point cloud originating from the guitar component, deviations caused by excess material on the guitar component are marked in colours different from the colours marking deviations (1) caused by a material deficit on the guitar component.

7. The method according to any one of claims 1 to 6, **characterised in that** it displays a fragment of the scan of the guitar component and displays on the user interface the dimensions between any selected points of the displayed fragment.
